# EUROPEAN PATENT APPLICATION

(11) **EP 3 985 831 A1**
(43) Date of publication of application: **20.04.2022**
(21) Application number: 21201427.8
(22) Date of filing: 07.10.2021
(51) Int. Cl.: H02J 7/00, H04R 25/00

(54) **SECONDARY BATTERY CHARGING SYSTEM, POWER MANAGEMENT INTEGRATED CIRCUIT, AND METHOD OF CHARGING SECONDARY BATTERY**

(30) Priority: 13.10.2020 JP 2020172794
(71) Applicant: Nitto Denko Corporation, Ibaraki-shi, Osaka 567-8680 (JP)
(72) Inventor: TSUDA, Hisashi, Ibaraki-shi, Osaka, 567-8680 (JP); SUEYOSHI, Taiki, Ibaraki-shi, Osaka, 567-8680 (JP); INOUE, Masami, Ibaraki-shi, Osaka, 567-8680 (JP); NISHIO, Hajime, Ibaraki-shi, Osaka, 567-8680 (JP)
(74) Representative: Müller-Boré & Partner Patentanwälte PartG mbB

(57) **Abstract**

Recharging of a secondary battery within a short time after the battery is fully charged is prevented. A method of achieving this prevention includes: a charging step of charging a secondary battery 22 by external power until a charging amount of the secondary battery 22 becomes equal to a fully charged amount, while stopping a driving component; and a stop continuation step of stopping the charging of the secondary battery 22 by the external power and stopping a driving component 21 in a stop continuation period in which the charging amount of the secondary battery 22 decreases from the fully charged amount to a predetermined charging amount.

## Description

### CROSS REFERENCE TO RELATED APPLICATION

The present application claims priority from Japanese Patent Application No. 2020-172794, which was filed on October 13, 2020, the disclosure of which is herein incorporated by reference in its entirety.

### BACKGROUND OF THE INVENTION

The present invention relates to a secondary battery charging system configured to charge a secondary battery, a power management integrated circuit, and a method of charging a secondary battery.

It has been demanded to complete recharging of a secondary battery within a short time in a portable device driven by power of the secondary battery, such as a hearing aid. Under this circumstance, for example, rapid recharging of a portable device is achieved in Patent Literature 1 (Japanese Unexamined Patent Publication No. 2015-109785) by suppressing power consumption in the charging by automatically switching between prohibition of operation of a driving component during charging and allowance of operation of the driving component during no charging, based on whether power is supplied from the outside.

### SUMMARY OF THE INVENTION

However, when the known portable device is fully charged and power supply from the outside is stopped, operation of the driving component is allowed, and the driving component is driven by power discharged from the secondary battery. On this account, if the portable device is left untouched after being fully charged, charging of the secondary battery is resumed soon. In this way, the known portable device tends to be frequently charged and discharged after being fully charged, with the result that the secondary battery tends to be deteriorated soon.

An object of the present invention is to provide a secondary battery charging system, a power management integrated circuit, and a method of charging a secondary battery, with which recharging of the secondary battery within a short time after the battery is fully charged is prevented.

The present invention relates to a secondary battery charging system comprising: a portable device which includes a secondary battery, a driving component driven by charged power of the secondary battery, a charging controller configured to charge the secondary battery by external power when the external power is equal to or larger than a predetermined value, and a driving controller configured to stop the driving component when the external power is input to the charging controller and to drive the driving component when input of the external power to the charging controller is stopped;
a charging device configured to charge the portable device by the external power; and
an external power controller which is configured to arrange the external power to be smaller than the predetermined value in a stop continuation period in which a charging amount of the secondary battery decreases from a fully charged amount to a predetermined charging amount, and to arrange the external power to be equal to or larger than the predetermined value in periods other than the stop continuation period.

According to the arrangement above, in periods other than the stop continuation period, which are before the battery is fully charged, the external power is arranged to be equal to or larger than the predetermined value, so that the charging controller charges the secondary battery and the driving controller stops the driving component in response to an input of the external power to the charging controller. Thereafter, in the stop continuation period after the secondary battery is fully charged, the external power is arranged to be smaller than the predetermined value, so that the charging controller stops the charging of the secondary battery but the stop of the driving component is continued due to the input of the external power to the charging controller. In summary, in this arrangement, as long as the external power is input to the charging controller, the driving component is kept stopped even after the battery is fully charged. Because the discharge of the secondary battery due to the driving of the driving component after the battery is fully charged is prevented, it is possible to avoid the occurrence of recharging of the secondary battery within a short time.

In the present invention,
the charging device includes an AC power supply mechanism configured to supply the external power as an electromagnetic wave of AC power by switching on/off a switching element,
the portable device includes an AC power receiving mechanism configured to receive the electromagnetic wave and rectify the electromagnetic wave to the external power,
the external power controller includes:
   a power changer which is capable of changing the external power to desired power; and
   a power controller which is configured to control the power changer to change the external power to a value not smaller than the predetermined value and to a value smaller than the predetermined value, based on the charging amount of the secondary battery, and
   the power changer is capable of changing the external power to desired power by performing phase shift control by which a phase difference in switching on/off by the AC power supply mechanism is adjusted.

According to this arrangement, it is possible to supply the external power that is equal to or larger than the predetermined value and the external power that is smaller than the predetermined value from the charging device to the portable device, with a high transmission efficiency.

In the present invention,
the charging device includes an AC power supply mechanism configured to supply the external power as an electromagnetic wave of AC power,
the portable device includes an AC power receiving mechanism configured to receive the electromagnetic wave and rectify the electromagnetic wave to the external power,
the external power controller includes:
   a power changer which is capable of changing the external power to desired power; and
   a power controller which is configured to control the power changer to change the external power to a value not smaller than the predetermined value and to a value smaller than the predetermined value, based on the charging amount of the secondary battery, and
   the power changer is capable of changing the external power to desired power by adjusting efficiency of transmission from the AC power supply mechanism to the AC power receiving mechanism.

With the arrangement above, switching between the external power equal to or larger than the predetermined value and the external power lower than the predetermined value can be easily done on both the charging device side and the portable device side, by adjusting parameters related to transmission efficiency, such as impedance and inductance.

In the present invention,
the external power controller includes:
   a power changer which is capable of changing the external power to desired power; and
   a power controller which is configured to control the power changer to change the external power to a value not smaller than the predetermined value and to a value smaller than the predetermined value, based on the charging amount of the secondary battery, and
the power changer has resistance values that are switchable, and is capable of changing the external power to desired power by adjusting the external power input to the charging unit by switching the resistance values.

With the arrangement above, switching between the external power equal to or larger than the predetermined value and the external power smaller than the predetermined value can be easily done by changing the resistance value.

In the present invention,
the external power controller inputs normal power to the charging controller as the external power until the charging amount of the secondary battery becomes a first charging amount that is set before a full charge start point at which constant-current charge is switched to constant-voltage charge, and inputs standby power which is smaller than the normal power and is not smaller than the predetermined value to the charging controller as the external power until the charging amount of the secondary battery changes from the first charging amount to a charging amount corresponding to the full charge start point.

According to the arrangement above, because the secondary battery is rapidly charged by the normal power until the charging amount reaches the first charging amount, recharging is quickly done and the portable device becomes usable with the first charging amount which is close to the fully-charged amount. Furthermore, while the charging amount changes from the first charging amount to the fully-charged amount, the charging is continued with the standby power which is smaller than the normal power and is not smaller than the predetermined value. It is therefore possible to fully charge the battery while avoiding excessive heating due to rapid charge.

The present invention relates to a power management integrated circuit which manages charging of a secondary battery by external power supplied from a charging device to a portable device, comprising:
a charging control unit which is configured to charge the secondary battery by the external power when the external power is equal to or larger than a predetermined value;
a drive control unit configured to stop the driving component when the external power is input to the charging control unit and to drive the driving component when input of the external power to the charging control unit is stopped; and
an external power control unit which is configured to arrange the external power to be smaller than the predetermined value in a stop continuation period in which a charging amount of the secondary battery decreases from a fully charged amount to a predetermined charging amount, and to arrange the external power to be equal to or larger than the predetermined value in periods other than the stop continuation period.

This arrangement makes it possible to further easily embody a function of preventing discharging of the secondary battery due to the operation of the driving component after the battery is fully charged, by means of the power management integrated circuit.

The present invention relates to a method of charging a secondary battery by external power supplied from a charging device to a portable device, comprising:
a charging step of charging the secondary battery by the external power until a charging amount of the secondary battery becomes equal to a fully charged amount, while stopping a driving component;
a stop continuation step of stopping the charging of the secondary battery by the external power and stopping the driving component in a stop continuation period in which the charging amount of the secondary battery decreases from the fully charged amount to a predetermined charging amount; and
a driving step of stopping the charging of the secondary battery by stopping supply of the external power from the charging device to the portable device, while driving the driving component by discharged power from the secondary battery.

According to this arrangement, as long as the external power is supplied from the charging device to the mobile device, the driving component is kept stopped until the battery is fully charged, even in the stop continuation period which is after the battery is fully charged and the charging is stopped. Because the discharge of the secondary battery due to the driving of the driving component after the battery is fully charged is prevented, it is possible to avoid the occurrence of recharging of the secondary battery within a short time.

The present invention prevents recharging of a secondary battery within a short time after the battery is fully charged.

### BRIEF DESCRIPTION OF THE DRAWINGS

FIG. 1 is a block diagram of a secondary battery charging system.
FIG. 2 shows how the secondary battery charging system operates.
FIG. 3 shows the relationship between a charging time, a charging amount, a charging current, and a battery voltage.
FIG. 4 is a block diagram of a secondary battery charging system.
FIG. 5 is a block diagram of a secondary battery charging system.
FIG. 6 is a block diagram of a secondary battery charging system.
FIG. 7 is a block diagram of a secondary battery charging system.
FIG. 8 shows how the secondary battery charging system operates.
FIG. 9 shows the relationship between a charging time, a charging amount, a charging current, and a battery voltage.

### DESCRIPTION OF THE PREFERRED EMBODIMENTS

### (Outline of Secondary Battery Charging System 1)

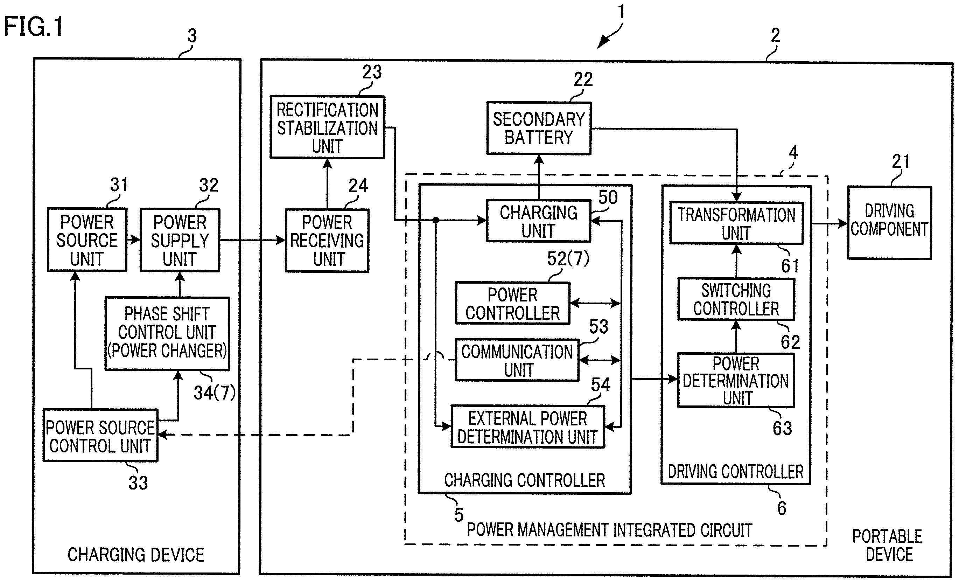

As shown in FIG. 1, a secondary battery charging system 1 of the present embodiment includes a portable device 2, a charging device 3, and an external power controller 7. The portable device 2 includes a secondary battery 22, a driving component 21 driven by the charged power of the secondary battery 22, a charging controller 5 configured to charge the secondary battery 22 by external power when the external power is equal to or larger than a predetermined value, and a driving controller 6 configured to stop the driving component 21 when the external power is input to the charging controller 5 and drive the driving component 21 when input of the external power to the charging controller 5 is stopped. The charging device 3 is configured to supply the external power to the portable device 2. In a stop continuation period in which the charging amount of the secondary battery 22 decreases from a fully charged amount to a predetermined charging amount, the external power controller 7 arranges the external power to be smaller than the predetermined value. In periods other than the stop continuation period, the external power controller 7 arranges the external power to be equal to or larger than the predetermined value.

FIG. 1 shows a case where the supply of the external power from the charging device 3 to the portable device 2 is performed in a wireless manner. Alternatively, the external power may be supplied through a wire. The predetermined value of the external power is any value as long as it is smaller than the external power with which the secondary battery 22 is charged in constant-current charge or constant -voltage charge.

The secondary battery charging system 1 is therefore arranged such that, in periods other than the stop continuation period, which are before the battery is fully charged, the external power is arranged to be equal to or larger than the predetermined value, so that the charging controller 5 charges the secondary battery 22 and the driving controller 6 stops the driving component 21 in response to an input of the external power to the charging controller 5. Thereafter, in the stop continuation period after the secondary battery 22 is fully charged, the external power is arranged to be smaller than the predetermined value, so that the charging controller 5 stops the charging of the secondary battery 22 but the stop of the driving component 21 is continued due to the input of the external power to the charging controller 5. In summary, in this arrangement, as long as the external power is input to the charging controller 5, the driving component 21 is kept stopped even after the battery is fully charged. Because the discharge of the secondary battery 22 due to the driving of the driving component 21 after the battery is fully charged is prevented, it is possible to avoid the occurrence of recharging of the secondary battery 22 within a short time.

### (Outline of Secondary Battery Charging System 1: Portable Device 2)

The portable device 2 encompasses a handheld device which can be carried by a hand and a human-wearable device which can be worn on a human body. Specific examples of the portable device 2 include a portable computer (a laptop PC, a note PC, a tablet PC, or the like), a camera, an audio visual device (a portable music player, an IC recorder, a portable DVD player, or the like), a calculator (such as a pocket computer and an electronic calculator), a game console, a computer peripheral (a portable printer, a portable scanner, a portable modem, or the like), a dedicated information device (an electronic dictionary, an electronic notebook, an electronic book, a portable data terminal, or the like), a portable communication terminal, a voice communication terminal (a mobile phone, a PHS, a satellite phone, a third party radio system, an amateur radio, a specified low power radio, a personal radio, a citizen radio, or the like), a data communication terminal (a portable phone, a PHS (a feature phone and a smart phone), a pager, or the like), a broadcasting receiver (a television receiver and a radio), a portable radio, a portable television receiver, a one-seg receiver, another type of device (a wristwatch and a pocket watch), a hearing aid, a handheld GPS, a security buzzer, a flashlight/pen light, a battery pack, and the like. Examples of the above hearing aid include an ear-hook hearing aid, an ear hole fitting hearing aid, and a glasses-type hearing aid. The portable device 2 may have an IoT (Internet of Things) function.

### (Outline of Secondary Battery Charging System 1: Secondary Battery 22)

The secondary battery 22 may be of any type as long as it is rechargeable. Various types of batteries including solid-state batteries may be employed as the secondary battery 22 in accordance with the type of the portable device 2. When the portable device 2 is a hearing aid, the secondary battery 22 preferably has a nominal voltage higher than the nominal voltage of an air battery. This is because, even if the secondary battery 22 outputs charged power at a nominal voltage higher than the nominal voltage of the air battery or the battery voltage is changed over a discharge time, a later-described transformation unit 61 transforms the charged power of the secondary battery 22 and outputs a voltage suitable for driving each driving component 21. On this account, in the same manner as in a case where each driving component 21 is driven by the air battery, each driving component 21 is stably driven by the charged power of the secondary battery 22.

By the term nominal voltage, it means a value used as a criterion of voltage between terminals, which is obtained when a battery is used in a normal state. The voltage between terminals is higher than the nominal voltage, when the battery is fully charged, and is lower than the nominal voltage, when discharging from the battery has taken place, or when a large current is supplied to a load. The nominal voltage of the air battery falls within a range of 1.2V to 1.4V. Being similar to the air battery, the nominal voltage of a nickel-hydrogen secondary battery 22 falls within a range of 1.2V to 1.4V. Examples of the secondary battery 22 whose nominal voltage is higher than that of the air battery include: a lead storage battery, a valve-regulated lead storage battery, a lithium air battery, a lithium ion battery, a lithium polymer battery, a manganese dioxide lithium secondary battery 22, a titanium carbon lithium secondary battery 22, and the like.

The nominal voltages of the lithium ion battery and the lithium polymer battery are 3.6V to 3.7V. The nominal voltage of the manganese dioxide lithium secondary battery 22 is 3.0V. The nominal voltage of the titanium carbon lithium secondary battery 22 is 1.5V. Further, voltage ranges of "discharge cut off voltage" and "charge termination voltage" of the lithium ion battery are 2.7V to 4.2V. By the discharge cut off voltage, it means the minimum value of voltage at which safe discharging is possible. By the charge termination voltage, it means the maximum value of voltage at which safe charging is possible.

The secondary battery 22 is preferably a lithium ion battery. The nominal voltage of the lithium ion battery which falls within a range of 3.6V to 3.7V is higher than the nominal voltages of 1.2V to 1.4V of the air battery or the nickel-hydrogen secondary battery 22. Although the lithium ion battery exhibits a discharge characteristic such that its battery voltage drops from approximately 4.2V to approximately 2.7V, the lithium ion battery is able to drive the portable device 2 longer than the air battery or the nickel-hydrogen secondary battery 22, because the energy density of the lithium ion battery is higher than that of the air battery or the nickel-hydrogen secondary battery 22.

### (Outline of Secondary Battery Charging System 1: Charging Method)

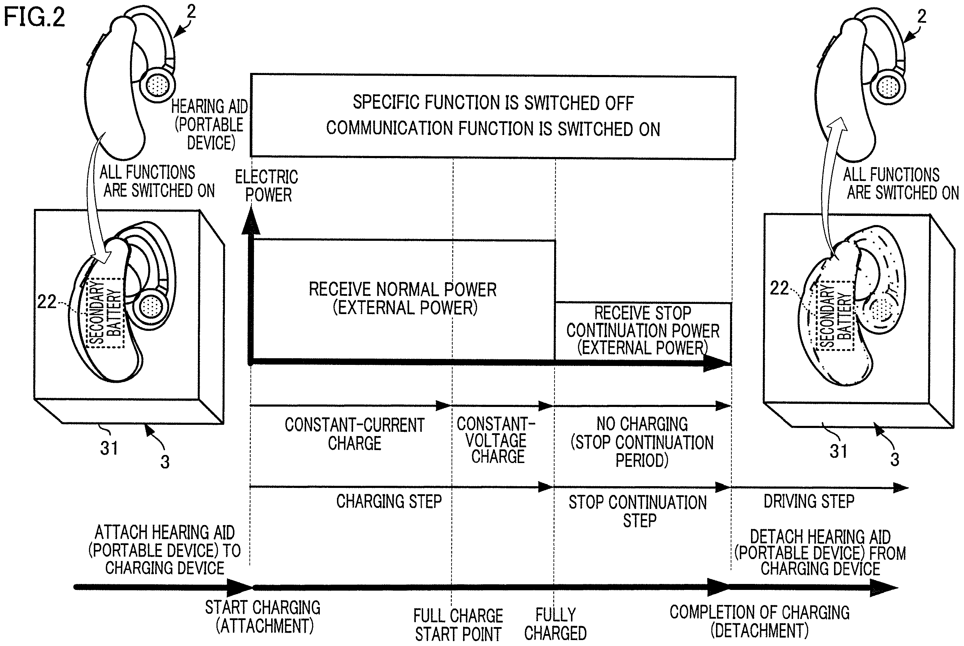

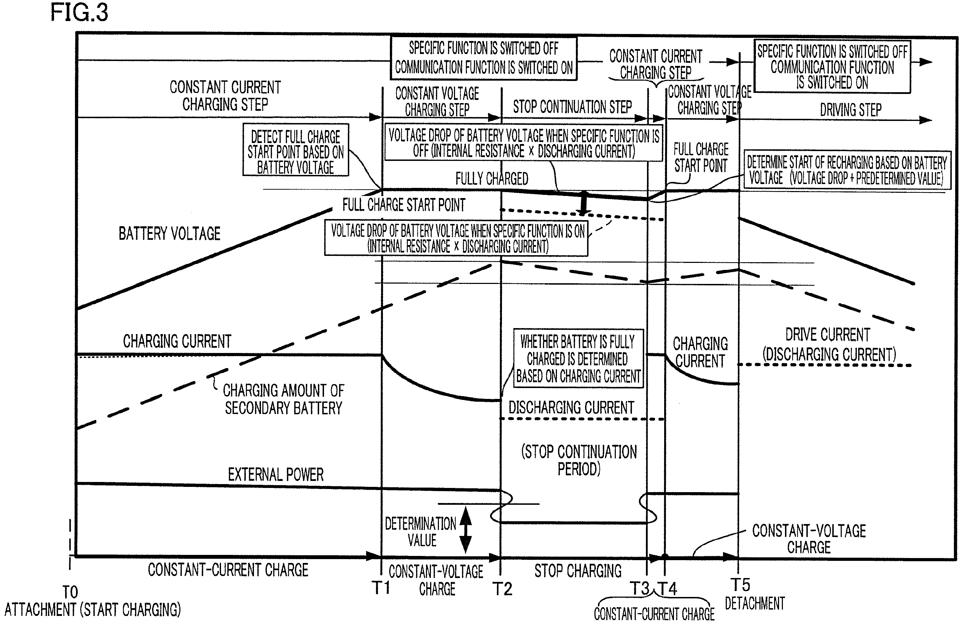

The secondary battery charging system 1 embodies a method of charging the secondary battery 22 by the external power supplied from the charging device 3 to the portable device 2. To be more specific, as shown in FIG. 2 and FIG. 3, the embodied charging method includes: a charging step of charging the secondary battery 22 by the external power until the secondary battery 22 is fully charged, while stopping the driving component 21; a stop continuation step of stopping the charging of the secondary battery 22 by the external power and stopping the driving component 21 in a stop continuation period in which the charging amount of the secondary battery 22 decreases from a fully charged amount to a predetermined charging amount; and a driving step of stopping the charging of the secondary battery 22 by stopping the supply of the external power from the charging device 3 to the portable device 2, while driving the driving component 21 by discharged power from the secondary battery 22.

How the secondary battery charging system 1 is operated by the execution of the charging method will be detailed. To begin with, when the portable device 2 is mounted on the charging device 3 in a power on-state, the battery voltage of the secondary battery 22 is detected and one of the charging step and the stop continuation step is executed based on the battery voltage. FIG. 2 and FIG. 3 show a state in which the secondary battery 22 has been sufficiently discharged.

### (Outline of Secondary Battery Charging System 1: Charging Method: Charging Step)

When the detected battery voltage is not a voltage indicating that the battery is fully charged, the charging step starts (T0). In the charging step, whether the battery voltage is not lower than a switching voltage indicating a charging amount at a full charge start point is determined. When the battery voltage is lower than the switching voltage, the secondary battery 22 is charged in the constant-current charge. When the battery voltage is equal to or higher than the switching voltage, the secondary battery 22 is charged in the constant - voltage charge. Either in the constant-voltage charge or in the constant-current charge, the secondary battery 22 is charged by the external power larger than the power of the determination value. When, by means of the constant-current charge, the battery voltage of the secondary battery 22 reaches the switching voltage at the full charge start point (T1), the charging scheme is switched to the constant -voltage charge. Either in the constant - voltage charge or in the constant-current charge, the driving component 21 (specific function) is arranged to be in an off-state by the external power.

### (Outline of Secondary Battery Charging System 1: Charging Method: Stop Continuation Step)

When the charging current is decreased to a value indicating the fully charged amount in the constant - voltage charge (T2), the stop continuation step is executed. To be more specific, the external power is switched to a value smaller than the predetermined value (determination value), and the charging of the secondary battery 22 by the external power is stopped. Also in this case, the driving component 21 (specific function) is arranged to be in an off-state by the external power.

In the stop continuation step, because, for example, a communication function is in an on-state, the charging amount gradually decreases due to the discharge of the secondary battery 22, with the result that the battery voltage decreases. Because the driving component 21 (specific function) is in the off-state, the discharging amount (discharging speed) of the secondary battery 22 per unit time is small as compared to the discharging amount when the driving component 21 (specific function) is in the on-state. It is therefore possible to elongate the period until the recharging is performed.

When the battery voltage decreases to a volage at which recharging starts (T3), switching to the charging step is performed and recharging by the constant-current charge and the constant - voltage charge is performed (T4 and T5) . In FIG. 3, because the voltage at which the recharging starts is arranged to be lower than the voltage at the full charge start point, the constant-current charge and the constant-voltage charge are performed. Alternatively, the voltage at which the recharging starts may be arranged to be higher than the voltage at the full charge start point.

### (Outline of Secondary Battery Charging System 1: Charging Method: Driving Step)

Thereafter, when the portable device 2 is detached from the charging device 3, the supply of the external power from the charging device 3 to the portable device 2 is stopped. As a result of this, the driving component 21 (specific function) is switched to the on-state, and a user is allowed to handle the portable device 2 in a normal state. Alternatively, the power source of the charging device 3 may be switched from the on-state to the off-state while the portable device 2 is in a state of being attached to the charging device 3. Also in this case, the driving component 21 (specific function) is arranged to be in the on-state as the supply of the external power is stopped.

### (Details of Secondary Battery Charging System 1: Portable Device 2)

As shown in FIG. 1, the portable device 2 includes a power receiving unit 24 and a rectification stabilization unit 23, in addition to the secondary battery 22, the driving component 21, the charging controller 5, and the driving controller 6.

When the portable device 2 is a hearing aid, the driving component 21 encompasses all types of components that are driven by electric power and are manufactured for hearing aids, such as a microphone, a loudspeaker, a light emitter, and a display. To be more specific, the driving component 21 includes an output unit such as a loudspeaker, a light emitter, and a display and an input unit such as a microphone and a switch. The driving component 21 including the output unit and the input unit is constituted by a driving component 21 driven by a voltage of about 1.2V which is the discharging voltage of the air battery. The driving component 21 therefore receives power after its voltage is decreased from 3.7V that is the nominal voltage of the lithium ion battery to 1.2V by the driving controller 6.

The driving controller 6 includes a transformation unit 61 configured to output the charged power of the secondary battery 22 at the driving voltage of the driving component 21, a power determination unit 63 configured to determine whether the external power is input to the charging controller 5 (charging unit 50), and a switching controller 62 configured to switch the transformation unit 61 from an operation state to a stopped state when the power determination unit 63 determines that the external power is input. The driving controller 6 therefore maintains the driving component 21 to be in the stopped state as long as the external power is input to the charging controller 5 (charging unit 50).

The transformation unit 61 has a function of outputting the charged power of the secondary battery 22 to the driving component 21, at a predetermined constant voltage. The transformation unit 61 includes at least one of a booster circuit configured to increase a voltage to be higher than the terminal voltage of the secondary battery 22 and a step-down circuit configured to decrease a voltage to be lower than the terminal voltage of the secondary battery 22. A linear regulator is adoptable as the step-down circuit, and a switching regulator is adoptable as the booster circuit and the step-down circuit. In this way, the transformation unit 61 makes it possible to use a driving component 21 driven at a voltage higher than or lower than the terminal voltage of the secondary battery 22, with the result that the degree of freedom in choice of driving component 21 is increased.

The portable device 2 may include plural driving components 21 and a driving controller 6 including plural transformation units 61, two or more of the driving components 21 may be driven by power at different voltages, and each transformation unit 61 may be configured to output power to the driving components 21 driven by power at different voltages, at voltages suitable for driving the respective driving components 21.

The power receiving unit 24 is capable of receiving external power supplied from the charging device 3 in a wireless power supply scheme such as electromagnetic induction and electromagnetic field resonance. The rectification stabilization unit 23 has a function of outputting a DC current by rectifying AC power input from the power receiving unit 24. A rectification-stabilization IC may be employed as the rectification stabilization unit 23, for example. The rectification-stabilization IC is an IC in which functions such as full bridge synchronous rectification, voltage conditioning and wireless power control, and protection from a voltage, current, or temperature anomaly are integrated into one chip.

The charging controller 5 is configured to charge the secondary battery 22 by the external power when the external power is equal to or larger than a predetermined value. To be more specific, the charging controller 5 includes a charging unit 50, a communication unit 53, and an external power determination unit 54.

The charging unit 50 has a charging function of supplying DC power which is external power from the rectification stabilization unit 23 to the secondary battery 22 at a predetermined voltage or a predetermined current. An IC for constant current / constant volage linear charger can be employed as the charging unit 50. The charging unit 50 has functions such as a function of notifying that the charging current has been reduced to a setting value, a function of ending the charging using a timer, a function of stabilizing the charging current by means of thermal feedback, and a function of limiting the chip temperature in a high-power mode or in high ambient temperatures. The charging unit 50 includes a switch unit configured to stop charging (constant-current charge and constant - voltage charge) of the secondary battery 22. The switch unit is configured to switch between allowance and prohibition of output of the external power to the secondary battery 22 by means of a switching signal from a discharge power detection unit 54.

The external power determination unit 54 has a function of converting external power which is input from the rectification stabilization unit 23 to the charging unit 50 from an analogue value to a digital external power value, a function or determining whether the external power value is not lower than a predetermined value, a function of outputting a switching signal indicating allowance of output to the charging unit 50 in order to charge the secondary battery 22 by the external power, when the external power value is not smaller than the predetermined value, and a function of outputting a switching signal indicating prohibition of output to the charging unit 50 in order to stop the charging of the secondary battery 22 by the external power, when the external power value is smaller than the predetermined value.

The communication unit 53 includes a charger communication interface by which communication with the charging device 3 is possible. The communication unit 53 is therefore able to send and receive various types of information and data such as the battery voltage, the charging current, and the discharging current of the secondary battery 22, the type of the secondary battery 22, and the temperature of the secondary battery 22, for example.

The charging controller 5 has one or some of the functions of the external power controller 7. To be more specific, the external power controller 7 includes a power changer 34 which is included in the charging device 3 and capable of changing the external power to a desired power and a power controller 52 which is provided in the charging controller 5 of the portable device 2 and is configured to control the power changer 34. The power changer 34 and the power controller 52 cooperate as the communication unit 53 sends control data of the external power to the charging device 3. To be more specific, the power controller 52 determines whether now is a stop continuation period in which the charging amount of the secondary battery 22 decreases from a fully charged amount to a predetermined charging amount. When now is the stop continuation period, control data instructing to arrange the external power to be lower than the predetermined value is sent from the power controller 52 to the charging device 3. Meanwhile, when now is a period other than the stop continuation period, control data instructing to arrange the external power to be equal to or higher than the predetermined value is sent from the power controller 52 to the charging device 3. The charging device 3 having received the control data sends, to the portable device 2, the external power which is controlled by units such as the power changer 34 based on the control data.

### (Details of Secondary Battery Charging System 1: Charging Device 3)

The charging device 3 includes a power supply unit 32 configured to supply AC power to the portable device 2 by electromagnetic induction, a power source unit 31 configured to supply AC power to the power supply unit 32, a phase shift control unit 34 (external power controller 7) configured to perform phase shift control of the power supply unit 32, and a power source control unit 33 configured to control the power source unit 31 and the phase shift control unit 34.

The phase shift control is a scheme of controlling supplied power by controlling a timing to drive a switching element of the power supply unit 32. To be more specific, the power supply unit 32 includes at least two switching elements constituting a current path, and the phase shift control unit 34 controls a timing (on/off timing) to drive each of the switching elements of the power supply unit 32.

With this arrangement, the phase shift control unit 34 makes it possible to variably adjust the supplied power by controlling a time to supply power to a primary coil by controlling a phase difference between drive signals by which switch on/off of each of the at least two switching elements constituting the current path is performed. On this account, for example, the supplied power (external power) can be increased and decreased at will through phase adjustment (adjustment of a phase difference) between drive signals by which switch on/off of each switching element is performed, without decreasing the power source voltage (operation voltage) of a power supply driver.

As such, in the secondary battery charging system 1, the charging device 3 includes an AC power supply mechanism (the power supply unit 32) configured to transmit the external power as an electromagnetic wave of AC power by switching on/off the switching elements, the portable device 2 includes an AC power receiving mechanism (the power receiving unit 24 and the rectification stabilization unit 23) configured to receive the electromagnetic wave and rectify the received power to the external power, and the power changer 34 is able to change the external power to a desired power by performing the phase shift control by which a phase difference in the switching on/off by the AC power supply mechanism is adjusted. In the secondary battery charging system 1, furthermore, the power source control unit 33 receives control data from the communication unit 53 of the charging controller 5, and the power source control unit 33 controls the phase shift control unit 34 so that the external power is switched between a value equal to or larger than a predetermined value and a value smaller than the predetermined value based on the charging amount (control data) of the secondary battery 22. The secondary battery charging system 1 is therefore able to supply the external power that is equal to or larger than the predetermined value and the external power that is smaller than the predetermined value from the charging device 3 to the portable device 2, with a high transmission efficiency.

As shown in FIG. 2, the charging device 3 includes a charging stand 31 on which the portable device 2 is mountable. When the portable device 2 is mounted on the charging stand 31, the power supply unit 32 (power-supplying coil) of the charging device 3 opposes the power receiving unit 24 (power-receiving coil) of the portable device 2. By simply mounting the mobile device 2 on the charging stand 31 of the charging device 3, the charging of the secondary battery 22 starts and the power supply from the secondary battery 22 of the portable device 2 to the driving component 21 is turned off. Meanwhile, by simply detaching the mobile device 2 from the charging stand 31 of the charging device 3, the charging of the secondary battery 22 stops and the power supply from the secondary battery 22 of the portable device 2 to the driving component 21 is turned on.

### (Modification 1 of Secondary Battery Charging System 1)

The secondary battery charging system 1 shown in FIG. 1 is arranged such that the external power supplied from the charging device 3 to the portable device 2 is adjusted by the phase shift control. The disclosure, however, is not limited to this arrangement.

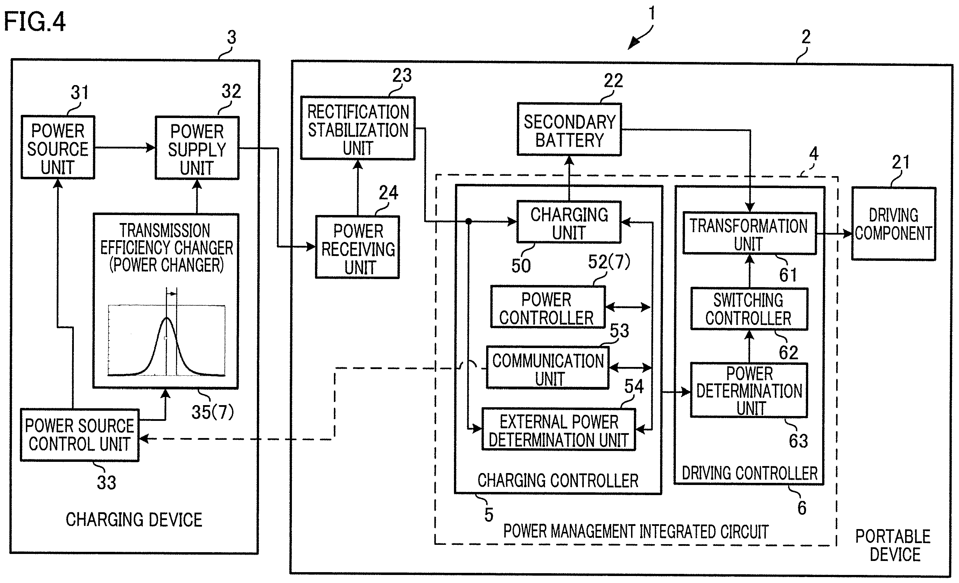

To be more specific, as shown in FIG. 4, the secondary battery charging system 1 may be arranged such that the charging device 3 includes an AC power supply mechanism (the power supply unit 32) configured to transmit the external power as an electromagnetic wave of AC power, the portable device 2 includes an AC power receiving mechanism (the power receiving unit 24 and the rectification stabilization unit 23) configured to receive the electromagnetic wave and rectify the received power to the external power, and a transmission efficiency changer 35 as a power changer 5 is provided in the portable device 2. The transmission efficiency changer 35 has changeable transmission efficiency parameters such as an impedance and an inductance related to the transmission efficiency. The external power is changeable to a desired power by adjusting the efficiency of transmission from the AC power supply mechanism (the power supply unit 32) to the AC power receiving mechanism (the power receiving unit 24 and the rectification stabilization unit 23). In the secondary battery charging system 1, furthermore, the power source control unit 33 receives control data from the communication unit 53 of the charging controller 5, and the transmission efficiency changer 35 adjusts the transmission efficiency parameters such as an impedance and an inductance related to the transmission efficiency so that the external power is switched between a value equal to or larger than a predetermined value and a value smaller than the predetermined value based on the charging amount (control data) of the secondary battery 22. The arrangements other than the above are identical with those in the embodiment above.

With the arrangement above, switching between the external power equal to or larger than the predetermined value and the external power lower than the predetermined value can be easily done by adjusting the transmission efficiency parameters. In other words, in the secondary battery charging system 1 shown in FIG. 4, charging information (control data) of the secondary battery 22 is sent from the communication unit 53 of the charging controller 5 to the power source control unit 33, and the power source control unit 33 is able to switch the external power supplied from the power supply unit 32 to the power receiving unit 24 between the external power equal to or larger than the predetermined value and the external power lower than the predetermined value, by controlling the transmission efficiency parameters of the transmission efficiency changer 35.

### (Modification 2 of Secondary Battery Charging System 1)

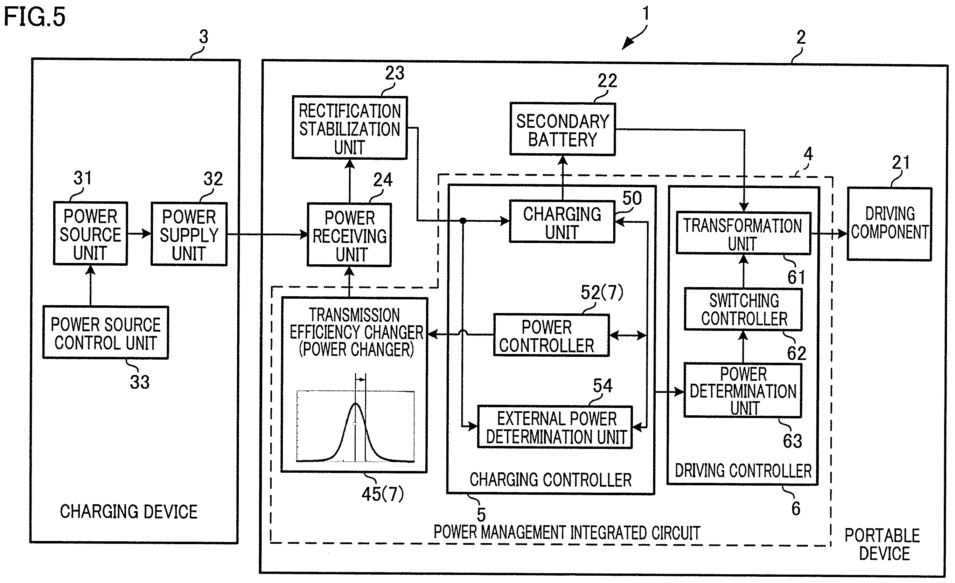

As shown in FIG. 5, the secondary battery charging system 1 may be arranged so that a transmission efficiency changer 45 (charging controller 5) capable of adjusting transmission efficiency parameters such as an impedance and an inductance is provided in the portable device 2 and is controllable by the power controller 52. With this arrangement, as the power controller 52 of the charging controller 5 directly controls the transmission efficiency parameters of the transmission efficiency changer 45, it is possible to switch the external power supplied from the power supply unit 32 to the power receiving unit 24 between the external power equal to or larger than the predetermined value and the external power smaller than the predetermined value. The arrangements other than the above are identical with those in the embodiment above.

Because the transmission efficiency changer 45 is provided in the portable device 2, it is possible solely on the portable device 2 side to switch the external power between normal power and standby power. As a result, a power management integrated circuit 4 in which the transmission efficiency changer 45 is integrated together with members such as the charging controller 5 can be constructed.

### (Modification 3 of Secondary Battery Charging System 1)

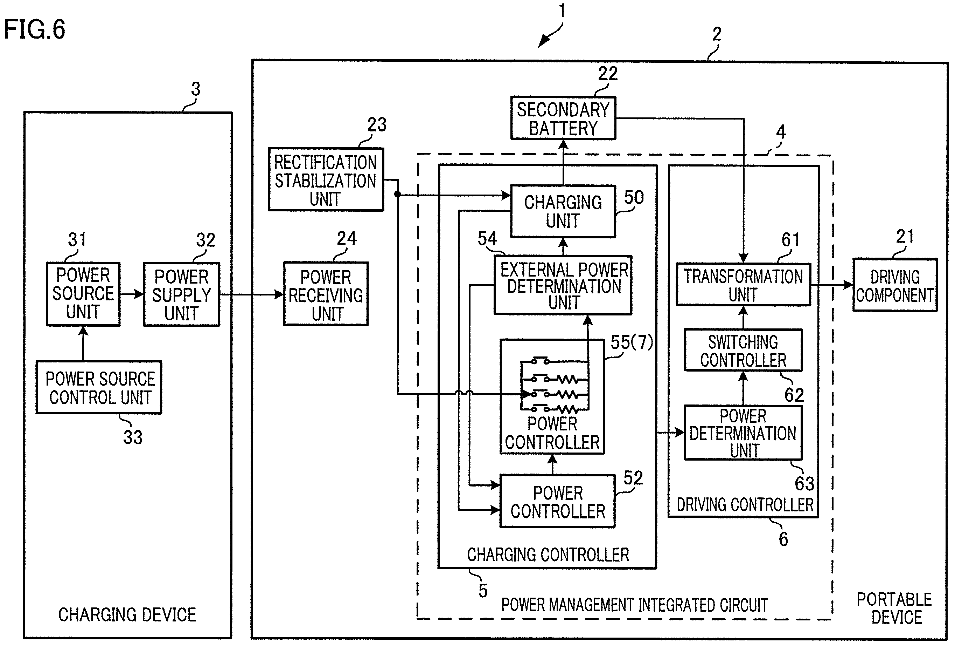

As shown in FIG. 6, the secondary battery charging system 1 includes a power changer 55 provided in the charging controller 5 of the portable device 2, the power changer 55 has plural resistance values that are switchable, and the external power can be changed to a desired power by adjusting the external power input to the charging unit 50 by changing the resistance value. In the secondary battery charging system 1, furthermore, the power controller 52 adjusts the resistance value of the power changer 55 based on the charging amount of the secondary battery 22, and outputs the external power input to the power changer 55 to the external power determination unit 54 by performing switching between a value not smaller than the predetermined value and a value smaller than the predetermined value. The arrangements other than the above are identical with those in the embodiment above.

With the arrangement above, switching between the external power equal to or larger than the predetermined value and the external power smaller than the predetermined value can be easily done by changing the resistance value. Furthermore, a power management integrated circuit 4 in which the power changer 55 is integrated together with members such as the charging controller 5 can be constructed.

### (Modification 4 of Secondary Battery Charging System 1)

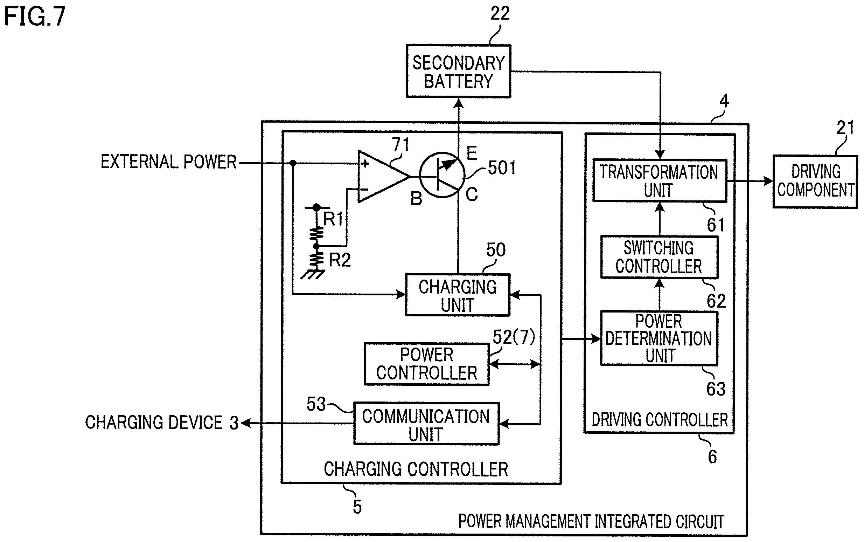

As shown in FIG. 7, the external power determination unit 54 may be embodied by a comparator 71, in the secondary battery charging system 1. To be more specific, the secondary battery charging system 1 includes the comparator 71 including an operational amplifier 71, a first resistor R1, and a second resistor R2. In the comparator 71, a voltage of external power is input to a plus input terminal of the operational amplifier. Meanwhile, to a minus input terminal of the operational amplifier, a reference voltage generated by dividing the driving voltage of the charging controller 5 by the first resistor R1 and the second resistor R2 is input as a predetermined value (determination value). The comparator 71 sets the output voltage of the output terminal at a high level to output a switching signal indicating allowance of output, when the voltage of the external power is equal to or higher than the reference voltage. Meanwhile, the comparator 71 sets the output voltage of the output terminal at a low level to output a switching signal indicating prohibition of output, when the voltage of the external power is lower than the reference voltage.

The output terminal of the comparator 71 is connected to a base portion B of a transistor 501 which functions as a switch unit of the charging unit 50. A collector portion C of the transistor 501 is connected to the output end of the charging unit 50. An emitter portion E of the transistor 501 is connected to the secondary battery 22. With this arrangement, in the transistor 501, when the external power input to the comparator 71 is equal to or higher than the reference voltage, the output voltage of the comparator 71 is set at the high level, and the secondary battery 22 is charged as the emitter portion E and the collector portion C are in a conductive state. Meanwhile, when the external power value is lower than the reference voltage, the output voltage of the comparator 71 is set at the low level, and the charging of the secondary battery 22 is stopped as the emitter portion E and the collector portion C are in a cutoff state.

### (Power Management Integrated Circuit)

On each of the portable devices 2 described in the embodiment shown in FIG. 1 and in Modifications 1 to 4 shown in FIG. 4 to FIG. 7, a single chip of the power management integrated circuit 4 in which various functions are integrated is preferably mounted. This is because the following functions can be easily realized by the power management integrated circuit 4: a charging function of charging the secondary battery 22 by the external power until the secondary battery 22 is fully charged, while stopping the driving component 21; a stop continuation function of stopping the charging of the secondary battery 22 by the external power and stopping the driving component 21 in a stop continuation period in which the charging amount of the secondary battery 22 decreases from fully charged to a predetermined charging amount; and a driving function of stopping the charging of the secondary battery 22 by stopping the supply of the external power from the charging device 3 to the portable device 2, while driving the driving component 21 by discharged power from the secondary battery 22.

The power management integrated circuit 4 is an integrated circuit in which the charging controller 5 and the driving controller 6 are integrated. In addition to these devices, the power management integrated circuit 4 preferably includes devices such as the transmission efficiency changer 45 (power changer), the power changer 55, and the comparator 71 as described in Modifications 2, 3, and 4 shown in FIG. 5 to FIG. 7. In this case, the charging function, the stop continuation function, and the driving function are realized solely by the portable device 2 including the power management integrated circuit 4.

To be more specific, the power management integrated circuit 4 includes: a charging control unit (charging controller 5) which is configured to manage charging of the secondary battery 22 by the external power supplied from the charging device 3 to the portable device 2 and charge the secondary battery 22 by the external power when the external power is equal to or larger than a predetermined value; a drive control unit (driving controller 6) which is configured to stop the driving component 21 when the external power is input to the charging control unit and drive the driving component 21 when the input of the external power to the charging control unit is stopped; and an external power control unit (external power controller 7) configured to arrange the external power to be smaller than a predetermined value in a stop continuation period in which the charging amount of the secondary battery 22 decreases from a fully charged amount to a predetermined charging amount and arrange the external power to be equal to or larger than the predetermined value in periods other than the stop continuation period.

### (Charging Speed Changing Function of Secondary Battery Charging System 1)

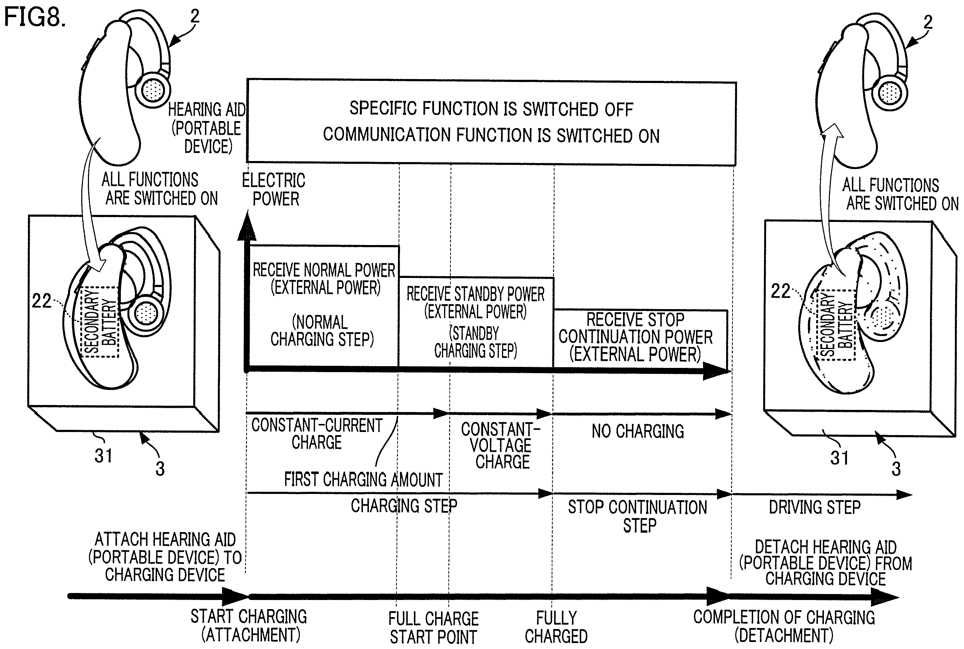

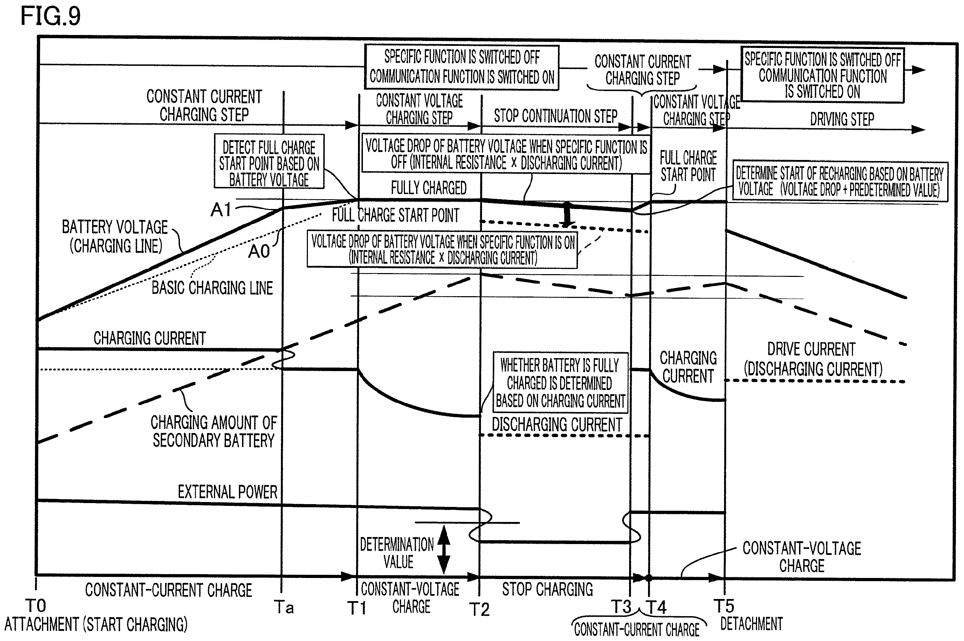

As shown in FIG. 8 and FIG. 9, the secondary battery charging system 1 may be arranged such that the external power controller 7 has a charging speed changing function. To be more specific, the external power controller 7 may have a charging speed changing function with which normal power is input to the charging controller 5 as the external power until the charging amount of the secondary battery 22 becomes a first charging amount that is set before the full charge start point at which the constant-current charge is switched to the constant - voltage charge, and standby power that is smaller than the normal power and is not smaller than the predetermined value is input to the charging controller 5 as the external power until the charging amount of the secondary battery 22 changes from the first charging amount to a charging amount corresponding to the full charge start point.

According to the arrangement above, because the secondary battery 22 is rapidly charged by the normal power until the charging amount reaches the first charging amount, recharging is quickly done and the portable device 2 becomes usable with the first charging amount which is close to the fully-charged amount. Furthermore, while the charging amount changes from the first charging amount to the fully-charged amount, the charging is continued with the standby power which is smaller than the normal power and is not smaller than the predetermined value. It is therefore possible to fully charge the battery while avoiding excessive heating due to rapid charge.

As shown in FIG. 9, the first charging amount is a charging amount after charging with a constant direct current is performed over a predetermined time (charging current × battery voltage × charging time). Therefore, due to the relationship between the charging current and the charging time of the first charging amount, a large charging current (normal power) is required to achieve the first charging amount in a short time. The first charging amount can be calculated based on the battery voltage.

The upper limit of the first charging amount is smaller than the charging amount of the secondary battery 22 at the full charge start point. This is because an amount equal to or larger than the charging amount at the full charge start point is equal to or larger than the charging amount in the fully-charged state. Meanwhile, the lower limit of the first charging amount is equal to the discharge amount of the portable device 2 at the full charge start point. This is because it is not possible to achieve the charging amount at the full charge start point if the lower limit is smaller than the discharge amount of the portable device 2.

The first charging amount A1 is preferably larger than a basic charging amount A0 which is indicated by an intersection between a basic charging line formed by performing constant-current charge until the full charge start point and the vertical axis of the battery voltage (or the charging time). This is because charging can be done within a short time when the first charging amount A1 is larger than the basic charging amount A0. The secondary battery 22 is charged more rapidly as the first charging amount is close to the charging amount of the secondary battery 22 at the full charge start point. This is because charging to the first charging amount is quickly done when a charging line (full line) in a period (T0 to Ta) between the start of the charging and the achievement of the first charging amount is steeper than the basic charging line (dotted line). Meanwhile, charging over a long period of time is possible when the first charging amount A1 is smaller than the basic charging amount A0. This arrangement is suitable for cases where the portable device 2 is left mounted on the charging device 3 for a long period of time.

The charging line reaching the first charging amount may be determined based on the temperature of the secondary battery 22 during the constant-current charge, or based on an average mounting time after the portable device 2 is repeatedly mounted on an detached from the charging device 3. When the charging line is determined based on the temperature of the secondary battery 22, the upper limit of the charging speed (charging current) until the first charging amount is achieved with the constant-current charge can be determined based on the temperature of the secondary battery 22.

When the charging line is determined based on an average mounting time, it is possible to perform the charging at a charging speed suitable for the way of use of the portable device 2 by the user. For example, mounting times each from the mounting of the portable device 2 on the charging device 3 to the detachment of the portable device 2 are stored, and an average of the mounting times is calculated. When the average mounting time is short, it is considered that the portable device 2 mounted on the charging device 3 tends to be detached in a short time and used. Meanwhile, when the average mounting time is long, it is considered that the portable device 2 tends to be attached to the charging device 3 and left untouched for a long time. In other words, how a user tends to use the portable device is grasped based on the average mounting time.

When the determination result shows that the charging is finished within a short time, charging to the first charging amount within a short time is preferred, and hence the charging is performed with a large charging current (normal power). Meanwhile, when the determination result shows that the portable device is left unused for a ling time, the portable device is charged over a long period of time with a charging current (normal power) taking into account of heat generation from the secondary battery 22. In this way, it is possible to provide a secondary battery charging system 1 dedicated to each user, by determining the first charging amount in consideration of how the user uses the portable device.

The normal power is electric power with which the secondary battery 22 is charged to the first charging amount by the constant-current charge. The larger the normal power is, the shorter the time required to achieve the first charging amount is. The standby power is electric power used for charging the secondary battery 22 having the first charging amount. The standby power is arranged to be smaller than the normal power. The lower limit of the standby power is arranged to be larger than the discharging power of the portable device 2 during the constant-current charge from the first charging amount to the full charge start point. While the secondary battery 22 is preferably charged by the standby power in a continuous manner, the secondary battery 22 may be charged by the standby power intermittently.

As described above, the secondary battery charging system 1 embodies a method of changing the speed of charging the secondary battery 22 by the external power supplied from the charging device 3 to the portable device 2. To be more specific, a method of changing the speed of charging, which includes the following steps, is realized: a normal charging step of charging the secondary battery 22 by the external power with the normal power until the charging amount becomes equal to the first charging amount that is set before the full charge start point at which the constant-current charge is switched to the constant - voltage charge; and a standby charging step of charging the secondary battery 22 by the external power with the standby power that is smaller than the normal power and is not smaller than the predetermined value until the charging amount of the secondary battery 22 changes from the first charging amount to a charging amount corresponding to the full charge start point.

Although the above descriptions have been provided with regard to the characteristic parts so as to understand the invention more easily, the invention is not limited to the embodiment as described above and can be applied to the other embodiments and the applicable scope should be construed as broadly as possible. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. In addition, it is required to sufficiently refer to the documents that have been already disclosed, so as to fully understand the objects and effects of the present invention.

## Claims

1. A secondary battery charging system comprising:
a portable device which includes a secondary battery, a driving component driven by charged power of the secondary battery, a charging controller configured to charge the secondary battery by external power when the external power is equal to or larger than a predetermined value, and a driving controller configured to stop the driving component when the external power is input to the charging controller and to drive the driving component when input of the external power to the charging controller is stopped;
a charging device configured to charge the portable device by the external power; and
an external power controller which is configured to arrange the external power to be smaller than the predetermined value in a stop continuation period in which a charging amount of the secondary battery decreases from a fully charged amount to a predetermined charging amount, and to arrange the external power to be equal to or larger than the predetermined value in periods other than the stop continuation period.

2. The secondary battery charging system according to claim 1, wherein,
the charging device includes an AC power supply mechanism configured to supply the external power as an electromagnetic wave of AC power by switching on/off a switching element,
the portable device includes an AC power receiving mechanism configured to receive the electromagnetic wave and rectify the electromagnetic wave to the external power,
the external power controller includes:
a power changer which is capable of changing the external power to desired power; and
a power controller which is configured to control the power changer to change the external power to a value not smaller than the predetermined value and to a value smaller than the predetermined value, based on the charging amount of the secondary battery, and
the power changer is capable of changing the external power to desired power by performing phase shift control by which a phase difference in switching on/off by the AC power supply mechanism is adjusted.

3. The secondary battery charging system according to claim 1, wherein,
the charging device includes an AC power supply mechanism configured to supply the external power as an electromagnetic wave of AC power,
the portable device includes an AC power receiving mechanism configured to receive the electromagnetic wave and rectify the electromagnetic wave to the external power,
the external power controller includes:
a power changer which is capable of changing the external power to desired power; and
a power controller which is configured to control the power changer to change the external power to a value not smaller than the predetermined value and to a value smaller than the predetermined value, based on the charging amount of the secondary battery, and
the power changer is capable of changing the external power to desired power by adjusting efficiency of transmission from the AC power supply mechanism to the AC power receiving mechanism.

4. The secondary battery charging system according to claim 1, wherein,
the external power controller includes:
a power changer which is capable of changing the external power to desired power; and
a power controller which is configured to control the power changer to change the external power to a value not smaller than the predetermined value and to a value smaller than the predetermined value, based on the charging amount of the secondary battery, and
the power changer has resistance values that are switchable, and is capable of changing the external power to desired power by adjusting the external power input to the charging unit by switching the resistance values.

5. The secondary battery charging system according to any one of claims 1 to 4, wherein,
the external power controller inputs normal power to the charging controller as the external power until the charging amount of the secondary battery becomes a first charging amount that is set before a full charge start point at which constant-current charge is switched to constant-voltage charge, and inputs standby power which is smaller than the normal power and is not smaller than the predetermined value to the charging controller as the external power until the charging amount of the secondary battery changes from the first charging amount to a charging amount corresponding to the full charge start point.

6. A power management integrated circuit which manages charging of a secondary battery by external power supplied from a charging device to a portable device, comprising:
a charging control unit which is configured to charge the secondary battery by the external power when the external power is equal to or larger than a predetermined value;
a drive control unit configured to stop the driving component when the external power is input to the charging control unit and to drive the driving component when input of the external power to the charging control unit is stopped; and
an external power control unit which is configured to arrange the external power to be smaller than the predetermined value in a stop continuation period in which a charging amount of the secondary battery decreases from a fully charged amount to a predetermined charging amount, and to arrange the external power to be equal to or larger than the predetermined value in periods other than the stop continuation period.

7. A method of charging a secondary battery by external power supplied from a charging device to a portable device, comprising:
a charging step of charging the secondary battery by the external power until a charging amount of the secondary battery becomes equal to a fully charged amount, while stopping a driving component;
a stop continuation step of stopping the charging of the secondary battery by the external power and stopping the driving component in a stop continuation period in which the charging amount of the secondary battery decreases from the fully charged amount to a predetermined charging amount; and
a driving step of stopping the charging of the secondary battery by stopping supply of the external power from the charging device to the portable device, while driving the driving component by discharged power from the secondary battery.
